# EUROPEAN PATENT SPECIFICATION

(11) **EP 1 227 600 B1**
(45) Date of publication and mention of the grant of the patent: **25.05.2016**
(21) Application number: 02250527.5
(22) Date of filing: 25.01.2002
(51) Int. Cl.: H04M 1/725, H04W 52/02, H04W 52/26, H04W 52/28

(54) **Method and system for setting a transmission power limit based on mobile station shape**
Verfahren und Vorrichtung zur Festlegung einer Sendeleistungsgrenze auf Basis der Form der Mobilstation
Procédé et dispositif pour définir une limite de puissance de transmission basée sur la forme de la station mobile

(30) Priority: 26.01.2001 JP 2001018586
(43) Date of publication of application: 31.07.2002
(73) Proprietor: NTT DoCoMo, Inc., Tokyo 100-6150 (JP)
(72) Inventor: Tagaki, Hirofumi, Yokohama-shi, Kanagawa 236-0058 (JP); Takami, Tadao, Yokosuka-shi, Kanagawa 238-0026 (JP)
(74) Representative: Hoffmann Eitle

(56) References cited:
- EP-A- 0 843 421
- WO-A-96/34461
- US-A- 5 815 820
- US-A- 5 999 832
- US-A- 6 002 943
- US-A- 6 029 074

## Description

The present invention relates to a mobile station for setting a transmission power limit (maximum transmission power) and transmitting a signal in accordance with the transmission power limit, a communication system comprising the mobile station, and a transmission method for transmitting a signal at a mobile station.

In mobile communication of prior art, a limit for the transmission power of a mobile station is determined in consideration, for example, of a coverage area. In such a case, only one transmission power limit is set regardless of the mode of use for the mobile station, required quality for communication, or the like.

Generally, required transmission power varies depending on a signal to be transmitted and received. For example, compared to voice communication, communication of data and moving images requires a higher speed and quality, and therefore greater transmission power. With increase in the transmission power to which a mobile station is adapted, that is, with a higher transmission power limit, regardless of whether or not communication is performed, the current consumption within the mobile station also becomes greater. For this reason, the transmission power limit may be normally kept low, increasing it to a higher level only when necessary. In this manner, power consumption of a mobile station may be reduced, allowing the mobile station to have a prolonged standby time.

Thus, an object of the present invention is to set an appropriate transmission power limit for a mobile station.

From patent publication US-A-5815820A there is known a portable radiotelephone that adjusts its transmit power responsive to the position of a movable antenna movable between a retracted and an extended position; the portable radiotelephone transmits at low power when the antenna is retracted and at high power when the antenna is extended.

From patent publication EP-A-0843421 there is known a mobile communication system in which the maximum transmitted power used by a mobile communication means is restricted, the upper limit of transmitted power being varied according to the mode of usage of the mobile communication means. A mobile communication means according to such a system meets the requirements made on a device operating close to the user's head, but the same mobile communication means may still be used in applications demanding greater transmitted power in a situation where the power limits placed on the radio set are less strict.

From patent publication US-A-6029074 there is known a mobile terminal that includes power control logic which limits the maximum transmit power of the mobile radio telephone to conserve battery power when it is operated in a hand-held mode. The mobile radio telephone includes power control logic which sets the transmit power in response to power control codes received from a base station corresponding to designated power levels. A signal is generated to indicate whether the mobile radio telephone is operated in a hand-held mode, and when this occurs the power control logic sets the power level at a maximum hand-held power level which is less than the maximum transmit power level.

In the first aspect of the present invention, there is provided a mobile station, comprising: transmitting means for transmitting a signal; and transmission power limit setting means for setting a transmission power limit based on whether or not an external device is connected to said mobile station, wherein the transmitting means is adapted to transmit the signal in accordance with the transmission power limit set by the transmission power limit setting means, and the transmission power limit setting means is further adapted to set said transmission power limit based on a shape of an external device connected to the mobile station.

Here, the external device may be one of an external camera, a personable computer, a viewer, and a PDA.

Here, the transmission power limit setting means may set the transmission power limit either for voice communication or for moving image communication.

In the second aspect of the present invention, there is provided a communication system, comprising: a mobile station and an external device connectable to the mobile station, wherein the mobile station comprises, transmitting means for transmitting a signal, and transmission power limit setting means for setting a transmission power limit based on whether or not an external device is connected to said mobile station, and wherein the transmitting means is adapted to transmit the signal in accordance with the transmission power limit set by the transmission power limit setting means, and the transmission power limit setting means is further adapted to set said transmission power limit based on a shape of an external device connected to the mobile station.

In the third aspect of the present invention, there is provided a transmission method for transmitting a signal at a mobile station, comprising the steps of: setting a transmission power limit based on whether or not an external device is connected to the mobile station, ; and transmitting the signal in accordance with the set transmission power limit, and setting the transmission power limit is further based on a shape of the external device connected to said mobile station.

Here, the external device may be one of an external camera, a personal computer, a viewer, and a PDA.

Here, the step of setting the transmission power limit may set the transmission power limit either for voice communication or for moving image communication.

According to the foregoing configuration, an appropriate transmission power limit may be set for a mobile station.

The above objectives are achieved by the subject matter of the independent claims. Preferred embodiments are defined in the dependent claims*.*
FIG. 1 is a diagram showing an example of a configuration of a mobile station according to the first example of the present invention;
FIG. 2 is a flow chart showing an example of a process at a mobile station according to the first example of the present invention;
FIG. 3 is a diagram illustrating how a mobile station may be folded;
FIG. 4 is a diagram showing an example of a configuration of a mobile station according to the second example of the present invention;
FIG. 5 is a diagram illustrating how connection between a mobile station and an external camera may be made;
FIG. 6 is a flow chart showing an example of a process at a mobile station according to the second example of the present invention;
FIG. 7 is a diagram showing another example of a configuration of a mobile station according to the second example of the present invention;
FIG. 8 is a diagram showing another example of a configuration of a mobile station according to the second example of the present invention;
FIG. 9 is a diagram showing an example of a configuration of a mobile station according to the first embodiment of the present invention;
FIG. 10 is a diagram illustrating how connection between a mobile station and a personal computer may be made; and
FIG. 11 is a flow chart showing an example of a process at a mobile station according to the first embodiment of the present invention.

In the following, the present invention will be described in detail with reference to the drawings.

### (First Example)

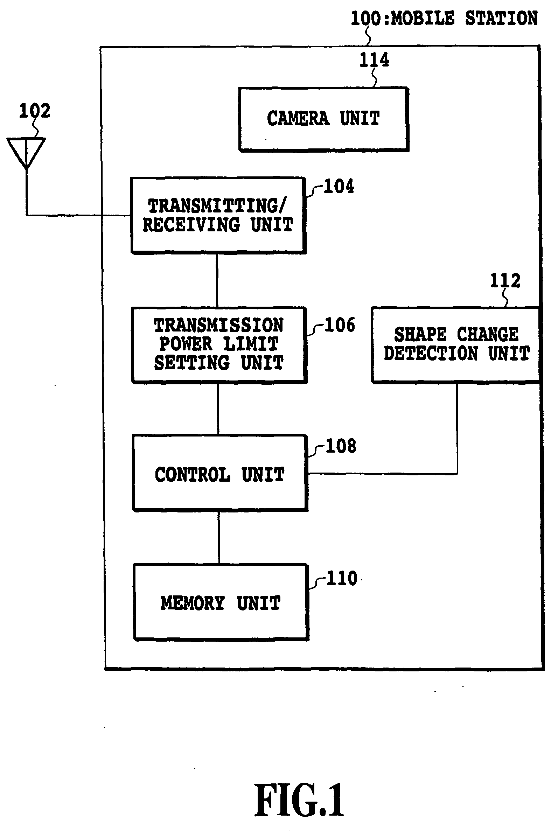

FIG. 1 is a diagram showing an example of a configuration of a mobile station according to the first example of the present invention. A mobile station 100 according to this example has an antenna 102, a transmitting/receiving unit 104, a transmission power limit setting unit 106, a control unit 108, a memory unit 110, a shape change detection unit 112, and a camera unit (built-in camera) 114. The mobile station 100 may transmit moving images (data) obtained with the camera unit 114.

The control unit 108 controls, among other things, a transmission power limit. The transmission power limit setting unit 106 sets a transmission power limit in accordance with an instruction from the control unit 108. The transmitting/receiving unit 104 communicates for example with a base station via the antenna 102. In such a case, it transmits a signal to the base station in accordance with the transmission power limit set by the transmission power limit setting unit 106.

In the memory unit 110, a transmission power limit Pv for voice communication and a transmission power limit Pm (>Pv) for moving image communication are stored in advance. While in this example transmission power limits for voice communication and moving image communication are stored, communication types may be classified in other ways and transmission power limits may be stored accordingly. Also, transmission power limits for three or more communication types may be stored.

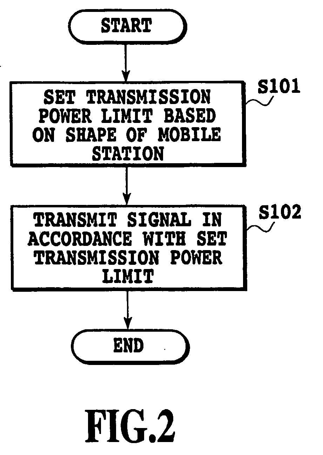

FIG. 2 is a flow chart showing an example of a process at a mobile station according to this first example.

The mobile station 100 (the control part 108) according to this example determines a transmission power limit based on a shape of the mobile station 100 (step S101). That is, when the mobile station 100 is not folded, thus presenting a shape that may be considered as allowing the user to hold it in hand to bring the speaker close to the ear for voice communication, the transmission power limit will be set to the one for voice communication, Pv. On the other hand, when the mobile station 100 is folded, presenting a shape from which moving image communication may be anticipated, the transmission power limit will be set to the one for moving image communication, Pm. Other shapes from which a mobile station is expected to perform moving image communication are such as when the mobile station is standing by a support.

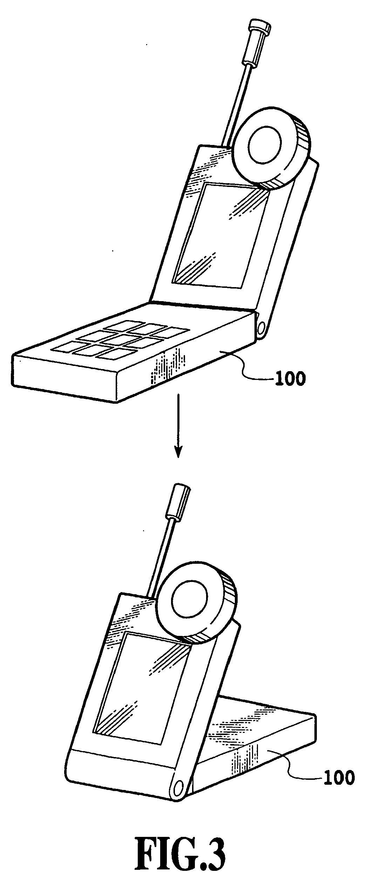

FIG. 3 is a diagram illustrating how the mobile station 100 may be folded. The control unit 108 recognizes a change in shape via the shape change detection unit 112 when the mobile station 100 is folded or when it is returned to the original state (unfolded state).

The mobile station 100 transmits a signal in accordance with the set transmission power limit (step S102).

### (Second Example)

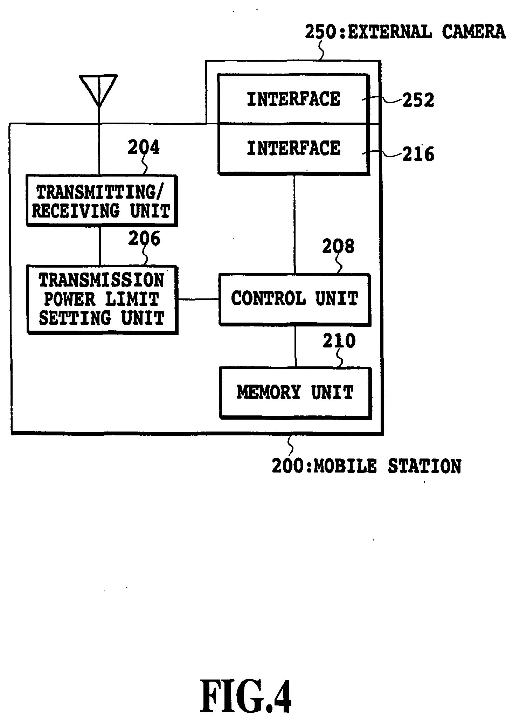

FIG. 4 is a diagram showing an example of a configuration of a mobile station according to the second example of the present invention. A mobile station 200 according to this second example has an antenna 202, a transmitting/receiving unit 204, a transmission power limit setting unit 206, a control unit 208, a memory unit 210, and an interface 216. An external camera 250 may be connected to the mobile station 200.

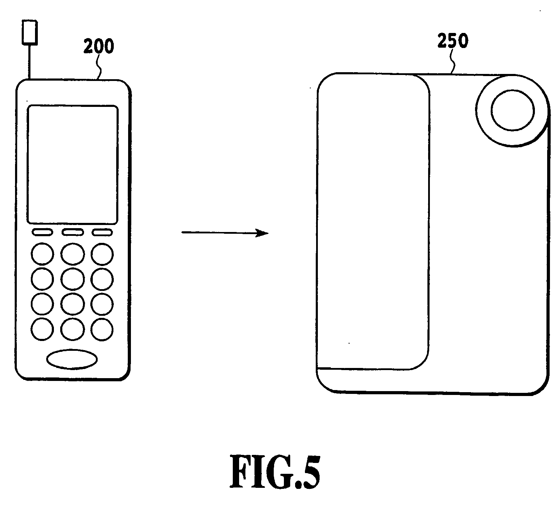

FIG. 5 is a diagram illustrating how connection between the mobile station 200 and the external camera 250 may be made. The connection between the mobile station 200 and the external camera 250 may be made via interfaces 216 and 252. The control unit 208 recognizes a change in connection via interface 216 when the external camera 250 is connected to or disconnected from the mobile station 200. The mobile station 200 may transmit moving images obtained with the external camera 250.

The control unit 208 controls, among other things, a transmission power limit. The transmission power limit setting unit 206 sets a transmission power limit in accordance with an instruction from the control unit 208. The transmitting/receiving unit 204 communicates for example with a base station via the antenna 202. In such a case, it transmits a signal to the base station in accordance with the transmission power limit set by the transmission power limit setting unit 206.

In the memory unit 210, a transmission power limit Pv for voice communication and a transmission power limit Pm (>Pv) for moving image communication are stored in advance. While in this example transmission power limits for voice communication and moving image communication are stored, communications types may be classified in other ways and transmission power limits may be stored accordingly. Also, transmission power limits for three or more communication types may be stored.

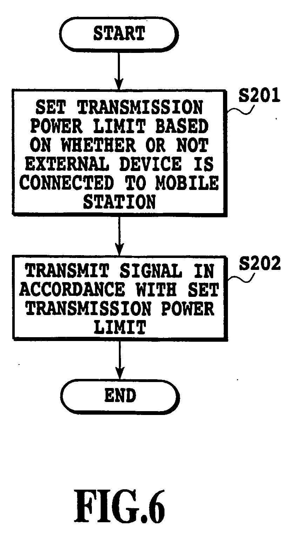

FIG. 6 is a flow chart showing an example of a process at a mobile station according to this second example.

The mobile station 200 (the control unit 208) according to this example determines a transmission power limit based on whether or not the external camera 250 is connected to the mobile station 200 (step S201). That is, when the external camera 250 is connected to the mobile station 200, and hence moving image communication may be anticipated, the transmission power limit will be set to the one for moving image communication, Pm. On the other hand, when the mobile station 200 is not connected to the external camera 250, and hence voice communication may be anticipated, the transmission power limit may be set to the one for voice communication, Pv.

The mobile station 200 transmits a signal in accordance with the set transmission power limit (step S202).

For connection between a mobile station and an external device (such as an external camera), besides physical connection, logical connection may be envisioned.

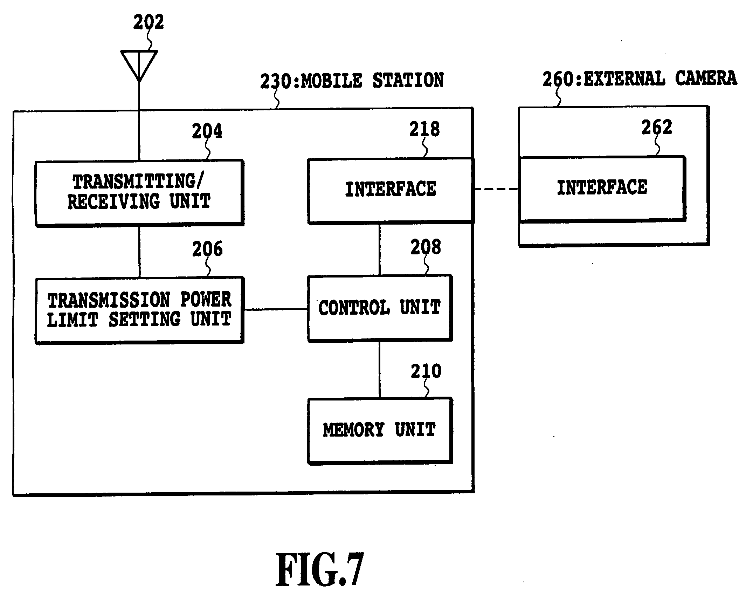

FIG. 7 is a diagram showing another example of a configuration of a mobile station according to the second example of the present invention. In FIG. 7, rather than the interfaces 216 and 252 for physical connection as shown in FIG. 4, interfaces 218 and 262 are employed for logical connection such as via infrared communication. Connection between a mobile station 230 and a external camera 260 may be made via the interfaces 218 and 262 to allow transmitting/receiving of a signal between the two.

As an external device, besides an external camera, a personal computer, a viewer for displaying images, a PDA (Personal Digital Assistants), or the like may be envisioned.

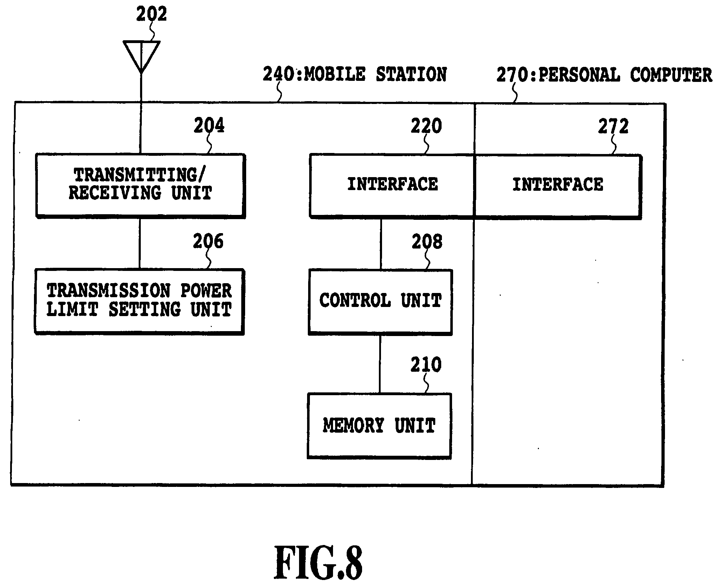

FIG. 8 is a diagram showing another example of a configuration of a mobile station according to the second example of the present invention. In FIG. 8, rather than the interfaces 216 and 252 for connection between the mobile station and the external camera as shown in FIG. 4, interfaces 220 and 272 are employed for connection between a mobile station and a personal computer. Connection between a mobile station 240 and a personal computer 270 may be made via the interfaces 220 and 272 to allow transmitting/receiving of a signal between the two.

Also, connection between a mobile station and a personal computer or the like may be made directly or via a communication cable. Also, infrared, radio, or the like may be used for the connection.

### (First Embodiment)

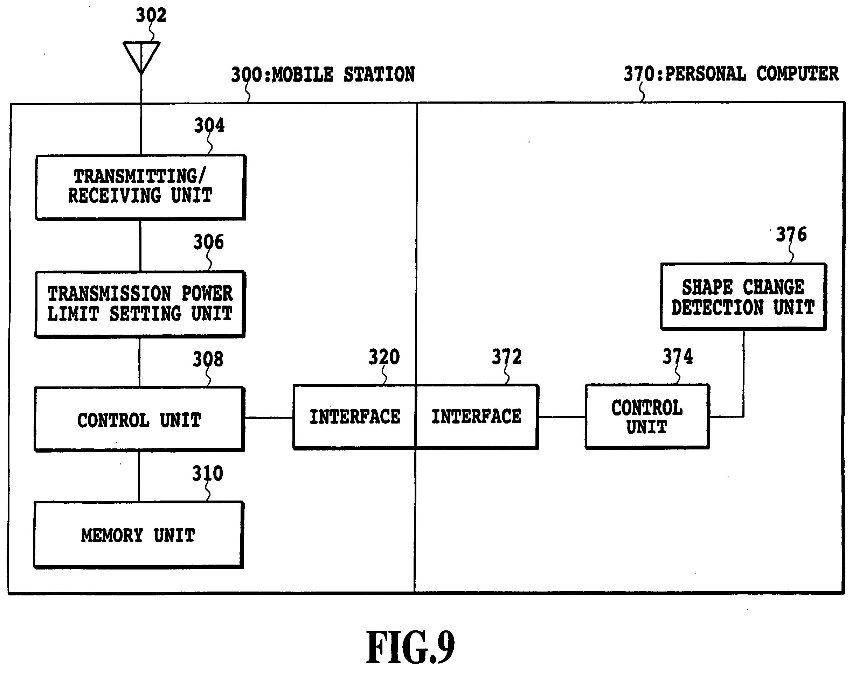

FIG. 9 is a diagram showing an example of a configuration of a mobile station according to the first embodiment of the present invention. A mobile station 300 according to this embodiment has an antenna 302, a transmitting/receiving unit 304, a transmission power limit setting unit 306, a control unit 308, a memory unit 310, and an interface 316. A personal computer 370 may be connected to the mobile station 300.

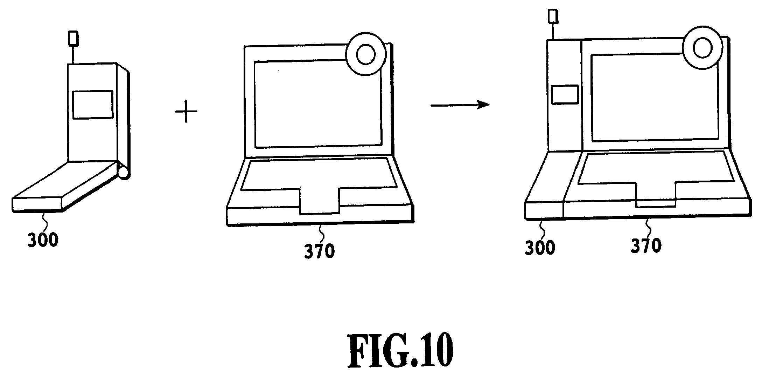

FIG. 10 is a diagram illustrating how connection between the mobile station 300 and the personal computer 370 may be made. The connection between the mobile station 300 and the personal computer 370 may be made via the interfaces 320 and 372. When the personal computer 370 is connected to the mobile station 300, the control unit 308 recognizes the connection via interface 320. The mobile station 300 may transmit moving images obtained with the personal computer 370. Also, the personal computer 370 shown in FIG. 10 has a built-in camera.

The control unit 308 controls, among other things, a transmission power limit. The transmission power limit setting unit 306 sets a transmission power limit in accordance with an instruction from the control unit 308. The transmitting/receiving unit 304 communicates for example with a base station via the antenna 302. In such a case, it transmits a signal to the base station in accordance with the transmission power limit set by the transmission power limit setting unit 306.

In the memory unit 310, a transmission power limit Pv for voice communication and a transmission power limit Pm (>Pv) for moving image communication are stored in advance. While in this embodiment transmission power limits for voice communication and moving image communication are stored, communications types may be classified in other ways and transmission power limits may be stored accordingly. Also, transmission power limits for three or more communication types may be stored.

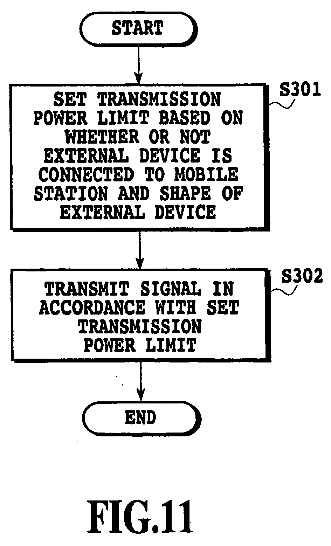

FIG. 11 is a flow chart showing an example of a process at a mobile station according to this first embodiment.

The mobile station 300 (the control unit 308) according to this embodiment determines a transmission power limit based on whether or not the personal computer 370 is connected to the mobile station 300, and a shape of the computer 370 (step S301). That is, when the personal computer 370 is connected to the mobile station 300 with the cover of the computer 370 being opened, and hence moving image communication is anticipated, the transmission power limit will be set to the one for moving image communication, Pm. On the other hand, when the personal computer 370 is not connected to the mobile station 300, or when the cover of the computer 370 is not opened, and hence voice communication is anticipated, the transmission power limit will be set to the one for voice communication, Pv.

When the cover is opened or closed at the personal computer 370, the control unit 374 recognizes the fact via the shape change detection unit 376. Then, the fact is reported to the control unit 308 of the mobile station 300 via the interfaces 372 and 320.

The mobile station 300 transmits a signal in accordance with the set transmission power limit (step S302).

While in this first embodiment, a transmission power limit is determined based on whether or not the personal computer 370 is connected to the mobile station 300, and a shape of the computer 370, a shape of the mobile station 300 may be taken into account in addition to a shape of the computer 370.

Also, a transmission power limit may be determined based on whether or not other external device is connected to the mobile station 300 , and a shape of the mobile station 300 and that of the external device.

As described in the foregoing, according to the present invention, an appropriate transmission power limit may be set for a mobile station. Thus, power consumption of a mobile station may be reduced, allowing the mobile station to have a prolonged standby time.

The present invention has been described in detail with respect to preferred embodiments, and it will now be apparent from the foregoing to those skilled in the art that changes and modifications may be made without departing from the scope of the present invention, as defined by the claims.

## Claims

1. A mobile station (300), comprising:
transmitting means (304) for transmitting a signal; and
transmission power limit setting means (306) for setting a transmission power limit based on whether or not an external device (370) is connected to said mobile station,
wherein said transmitting means is adapted to transmit the signal in accordance with the transmission power limit set by said transmission power limit setting means,
**characterized in that**
said transmission power limit setting means (306) is further adapted to set said transmission power limit based on a shape of said external device (370) connected to said mobile station.

2. The mobile station as claimed in claim 1, **characterized in that** said external device is one of an external camera, a personal computer, a viewer, and a PDA.

3. The mobile station as claimed in claim 1, **characterized in that** said transmission power limit setting means sets the transmission power limit either for voice communication or for moving image communication.

4. A communication system, comprising:
a mobile station (300) and an external device (370) connectable to said mobile station,
wherein said mobile station comprises,
transmitting means (304) for transmitting a signal, and
transmission power limit setting means (306) for setting a transmission power limit based on whether or not an external device is connected to said mobile station, and
wherein said transmitting means is adapted to transmit the signal in accordance with the transmission power limit set by said transmission power limit setting means,
**characterized in that**
said transmission power limit setting means (306) is further adapted to set said transmission power limit based on a shape of said external device (370) connected to said mobile station.

5. A transmission method for transmitting a signal at a mobile station, comprising the steps of:
setting (S301) a transmission power limit based on whether or not an external device is connected to the mobile station, and
transmitting (S302) the signal in accordance with the set transmission power limit,
**characterized in that**
setting (S301) the transmission power limit is further based on a shape of the external device connected to said mobile station.

6. The transmission method as claimed in claim 5, **characterized in that** said external device is one of an external camera, a personal computer, a viewer, and a PDA.

7. The transmission method as claimed in claim 5, **characterized in that** said step of setting the transmission power limit sets the transmission power limit either for voice communication or for moving image communication.

## Patentansprüche

1. Eine Mobilstation (300) aufweisend:
Übermittlungsmittel (304) zum Übermitteln eines Signals; und
Übermittlungsleistungsbegrenzungs-Einstellmittel (306) zum Einstellen einer Übermittlungsleistungsbegrenzung basierend darauf, ob eine externe Vorrichtung (370) mit der Mobilstation verbunden ist,
wobei die Übermittlungsvorrichtung eingerichtet ist, das Signal gemäß der Übermittlungsleistungsbegrenzung, welche durch das Übermittlungsleistungsbegrenzungs-Einstellmittel eingestellt ist, zu übermitteln,
**dadurch gekennzeichnet, dass**
das Übermittlungsleistungsbegrenzungs-Einstellmittel (306) weiterhin eingerichtet ist, die Übermittlungsleistungsbegrenzung basierend auf einer Form der externen Vorrichtung (370), die mit der Mobilstation verbunden ist, einzustellen.

2. Die Mobilstation, wie in Anspruch 1 beansprucht, **dadurch gekennzeichnet, dass** die externe Vorrichtung eine ist aus externer Kamera, einem Personal Computer, einem Viewer, und einem PDA.

3. Die Mobilstation, wie in Anspruch 1 beansprucht, **dadurch gekennzeichnet, dass** das Übermittlungsleistungsbegrenzungs-Einstellmittel die Übermittlungsleistungsbegrenzung entweder für Sprachkommunikation oder für Bewegtbild-Kommunikation einstellt.

4. Ein Kommunikationssystem aufweisend:
eine Mobilstation (300) und eine externe Vorrichtung (370), die mit der Mobilstation verbindbar ist,
wobei die Mobilstation aufweist,
Übermittlungsmittel (304) zum Übermitteln eines Signals, und
Übermittlungsleistungsbegrenzungs-Einstellmittel (306) zum Einstellen einer Übermittlungsleistungsbegrenzung basierend darauf, ob eine externe Vorrichtung mit der Mobilstation verbunden ist, und
wobei das Übermittlungsmittel eingerichtet ist, zum Übermitteln des Signals gemäß der Übermittlungsleistungsbegrenzung, welche durch das Übermittlungsleistungsbegrenzungs-Einstellmittel eingestellt ist,
**dadurch gekennzeichnet, dass**
das Übermittlungsbegrenzungs-Einstellmittel (306) weiterhin eingerichtet ist, die Übermittlungsleistungsbegrenzung basierend auf einer Form der externen Vorrichtung (370), die mit der Mobilstation verbunden ist, einzustellen.

5. Ein Übermittlungsverfahren zur Übermittlung eines Signals in einer Mobilstation, aufweisend die Schritte:
Einstellen (S301) einer Übermittlungsleistungsbegrenzung basierend darauf, ob eine externe Vorrichtung mit der Mobilstation verbunden ist, und
Übermitten (S302) des Signals gemäß der Übermittlungsleistungsbegrenzung,
**dadurch gekennzeichnet, dass**
das Einstellen(S301) der Übermittlungsleistungsbegrenzung weiterhin basiert auf einer Form der externen Vorrichtung, die mit der Mobilstation verbunden ist.

6. Das Übermittlungsverfahren wie in Anspruch 5 beansprucht, **dadurch gekennzeichnet, dass** die externe Vorrichtung eine ist aus externer Kamera, einem Personal Computer, einem Viewer, und einem PDA.

7. Das Übermittlungsverfahren wie in Anspruch 5 beansprucht, **dadurch gekennzeichnet, dass** der Schritt des Einstellens der Übermittlungsleistungsbegrenzung die Übermittlungsleistungsbegrenzung entweder für Sprachkommunikation oder für Bewegtbild-Kommunikation einstellt.

## Revendications

1. Station mobile (300), comprenant :
un moyen de transmission (304) pour transmettre un signal ; et
un moyen de réglage de limite de puissance de transmission (306) pour régler une limite de puissance de transmission selon qu'un dispositif externe (370) est relié ou non à ladite station mobile,
dans laquelle ledit moyen de transmission est apte à transmettre le signal en fonction de la limite de puissance de transmission réglée par ledit moyen de réglage de limite de puissance de transmission,
**caractérisée en ce que** :
ledit moyen de réglage de limite de puissance de transmission (306) est en outre apte à régler ladite limite de puissance de transmission sur la base d'une forme dudit dispositif externe (370) relié à ladite station mobile.

2. Station mobile selon la revendication 1, **caractérisée en ce que** ledit dispositif externe est l'un ou l'autre d'une caméra externe, d'un ordinateur personnel, d'une visionneuse et d'un PDA.

3. Station mobile selon la revendication 1, **caractérisée en ce que** ledit moyen de réglage de limite de puissance de transmission règle la limite de puissance de transmission pour une communication vocale ou pour une communication d'images animées.

4. Système de communication, comprenant :
une station mobile (300) et un dispositif externe (370) pouvant être relié à ladite station mobile,
dans lequel ladite station mobile comprend :
un moyen de transmission (304) pour transmettre un signal, et
un moyen de réglage de limite de puissance de transmission (306) pour régler une limite de puissance de transmission selon qu'un dispositif externe est relié ou non à ladite station mobile, et
dans lequel ledit moyen de transmission est apte à transmettre le signal en fonction de la limite de puissance de transmission réglée par ledit moyen de réglage de limite de puissance de transmission,
**caractérisé en ce que** :
ledit moyen de réglage de limite de puissance de transmission (306) est en outre apte à régler ladite limite de puissance de transmission sur la base d'une forme dudit dispositif externe (370) relié à ladite station mobile.

5. Procédé de transmission pour transmettre un signal à une station mobile, comprenant les étapes consistant à
régler (S301) une limite de puissance de transmission selon qu'un dispositif externe est relié ou non à ladite station mobile, et
transmettre (S302) le signal en fonction de la limite de puissance de transmission réglée,
**caractérisé en ce que** :
le réglage (S301) de la limite de puissance de transmission est en outre basé sur une forme du dispositif externe relié à ladite station mobile.

6. Procédé de transmission selon la revendication 5, **caractérisé en ce que** ledit dispositif externe est l'un ou l'autre d'une caméra externe, d'un ordinateur personnel, d'une visionneuse et d'un PDA.

7. Procédé de transmission selon la revendication 5, **caractérisé en ce que** ladite étape de réglage de la limite de puissance de transmission règle la limite de puissance de transmission pour une communication vocale ou pour une communication d'images animées.
